# EUROPEAN PATENT APPLICATION

(11) **EP 2 749 166 A1**
(43) Date of publication of application: **02.07.2014**
(21) Application number: 12851548.3
(22) Date of filing: 18.04.2012
(51) Int. Cl.: A01N 37/10

(54) **COMPOSITION FOR CONTROLLING FUNGAL CONTAMINATION AND METHOD OF USE**

(30) Priority: 23.11.2011 ES 201131882 P
(71) Applicant: Betelgeux, S. L., 46701 Gandia Valencia (ES)
(72) Inventor: ORIHUEL IRANZO, Enrique, José, 46701 Gandía, Valencia (ES); BERTÓ NAVARRO, Ramón, 46701 Gandía, Valencia (ES); CANET GASCÓ, Juan, José, 46701 Gandía, Valencia (ES)
(74) Representative: Ungria López, Javier
(86) International application number: PCT/ES2012/070258
(87) International publication number: WO 2013/076328

(57) **Abstract**

The present invention relates to an antifungal composition for environmental control of fungal growth, comprising: a food-grade alcohol in a percentage of between 1% and 20% of the total of the composition, both limits being included; at least one food-grade preservative with antifungal properties selected from the group of those derived from organic acids, in a percentage of between 0.1% and 1.0% of the total of the composition, both limits being included; and the remainder being water, up to 100% of the composition. In addition, by preference, the composition may contain, furthermore, at least a second food-grade preservative additive with antifungal properties selected from the group of polyene macrolides. A further subject matter of the present invention is the application method for the composition in order to control environmental fungal growth, principally at food-industry facilities for producing, storing, drying and/or curing foods such as, for example, cheese, ham and sausages.

## Description

### TECHNICAL FIELD OF THE INVENTION

The present invention falls within the field of Health, specifically Health in the food industry, in regard to the control and elimination of fungal contaminants in environments of processing and storage of perishable foods such as cured and dried foods (cheese, ham, sausages, etc.).

### BACKGROUND OF THE INVENTION

The fungal contamination of food is a health and technology problem that affects numerous food products and which has many different causes. Among the products that are contaminated by molds there are cheese, cured ham and some types of sausage, which are subjected to drying and maturing processes in chambers or cellars.

In the case of pork cured ham, the majority population of molds belongs to the genus *Penicillium* and *AspergilluslEurotium,* less often isolating species of the genus *Alternaria, Aurobasidium, Cladosporium, Curvularia, Paecyclomyces, Syncephalastrum* and *Trichoderma.* The dominant genus until the middle of the maturation stage in cellar is usually *Penicillium,* but during the last months of maturation this genus is displaced by species belonging to the genus *Aspergillus*/*Eurotium* (Ventanas, 2001). Proteolytic and lipolytic activities of fungal populations can contribute to the biochemical changes that occur during maturation of ham and thus to the sensory characteristics of the final product. However, a high incidence of toxigenic molds such as *Penicillium commune, Penicillium aurantiogriseum, Eurotium herbariorum* and *Eurotium repens* is detected (Nuñez, 1994).

Regarding cheese, fungal contamination during processing and maturation processes is a serious problem, both from a commercial point of view and from the point of view of food safety. Mold growth is responsible for the appearance of colored spots on the surface, undesirable odors and flavors and texture changes that cause a loss of quality and even the total rejection of the product. From a health point of view it should be considered that almost all fungal metabolites may show some form of toxicity (Fente Sampayo, 1993). In a study on the type of fungal contaminants in artisan cheese factories in Galicia, the largest number of different genus was found in the air while in the cheese the most representative genus were: *Rhizopus, Cladosporium sp., Geotrichum sp., Penicillium sp.* and *Aspergillus sp.* (Fente-Sampayo, 2002). In another study carried out in cheese making factories in Norway, the more frequently detected species were *Penicillium brevicompactum, Geotrichum candidum, P. commune, P. palitans, P. solitum* and *P. roqueforti* (Skaar, 2004).

The growth of mold on food stored in chambers, cellars and dryers occurs due to the presence of molds and spores in the environment and on surfaces (walls, floor and ceiling). Mainly molds and spores are transported through air to the surface of the cheese, ham or sausages. Once on the surface, the substrate characteristics, rich in nutrients and with water activity suitable for the development of different fungi, makes them easily proliferate, being observed in visible form on the product, resulting in costs increases, due to product brushing, shrinkage, prevention treatments with food-grade additives, decreased commercial value, etc. At the same time, the presence of such contamination adds some risk to human health due to the possible presence of mycotoxins. In fact, it is common to find high mold counts in both surfaces and in the air of chambers, cellars and dryers, as highlighted by several studies that analyzed the fungal contamination of the environment and surfaces (Skaar, 2004; Fente Sampayo, 2002).

The sanitation of surfaces and environments in the food industry in general is vital for obtaining a safe product from the microbiological point of view, the shelf life of which is not diminished by spoilage microorganisms (Marriot, 1985; Carsberg, 2003). All food production areas must be cleaned and disinfected daily, especially monitoring cleaning and disinfection (C & D) of the working areas.

The use of protocols that alternate acid detergents with alkaline detergent is widespread, followed by the use of broad-spectrum disinfectants with bactericidal activity effective against pathogens and which, in addition, possess fungicidal properties. However, the amounts of fungicides used are considered too high for control and elimination of fungal contamination in the food industry. In parallel, a continuous monitoring of the proper implementation of the C & D protocols, and also regular monitoring of the effectiveness of the procedures should be used. In this respect, the validation of the C & D procedures by using microbiological analysis of surfaces by the contact inoculation technique has lead to satisfactory results (Orihuel, 1998).

However, in the food storage and curing chambers, such as cellars and dryers, daily C & D practices cannot be applied usually, because they are usually occupied by the food and disinfectant products cannot be applied in the presence of food. These tasks are performed only after more or less prolonged periods of time, depending on the food type, which is why, as already indicated above, high mold microbial counts usually occur in environments and surfaces, and the presence of food pathogens is also occasionally detected.

To try to solve this problem, a working system has been developed that, from the analysis of the causes of the problem, allows to control the fungal presence in environments and surfaces such as food industry facilities, especially in dryers, cellars and chambers in the presence of food, by using a composition designed for this purpose based on food-grade additives and with antifungal properties, and its specific application method. Through this system of control of fungal contamination, the presence of surface mold in food has been minimized, with the consequent costs reduction and a better presentation.

### DESCRIPTION OF THE INVENTION

A first object of the present invention is an antifungal composition for environmental control of fungal growth, comprising:
- a food-grade additive which is an alcohol, i.e. a food-grade alcohol, in a percentage comprised between 1% and 20% of the total of the composition, both limits being included;
- at least one food-grade preservative additive with antifungal properties selected from the group of those derived from organic acids, in a percentage comprised between 0.1% and 1.0% of the total of the composition, both limits being included, and
- the remainder being water, up to 100% of the composition.

In the scope of the present specification food-grade additive means any substance which, without constituting a food itself, is intentionally added to foods and beverages to modify their properties (flavor, preparation, preservation, etc.).

Said composition, which can be said that it is an antifungal composition valid for its use on foods since it consists essentially of food-grade additives, is designed for the control of fungal contamination, inhibiting their growth on the surface of food products and on the surface and atmosphere of the facilities where they are stored, dried or cured. Its continued use makes it possible to reduce environmental fungal contamination in food processing facilities to safe levels, such as cheese, ham, sausages, etc. dryers and it also has the advantage that it can be applied in the presence of food, without them being affected. Food-grade alcohol acts as humectant, while the preservative acts as an antifungal.

Preferably, the food-grade alcohol is propane-1,2-diol or propylene glycol, which in the particular case of this invention helps to facilitate the application of the composition by nebulisation and its absorption on the surface of food.

For its part, the at least one food-grade preservative with antifungal properties is derived from an organic acid such as, preferably but without limitation, sorbic acid or benzoic acid. More preferably, this preservative is potassium sorbate, an organic salt derived from sorbic acid.

Thus, in a particular embodiment of the invention, the composition consists of:
- propane-1,2-diol, at 10% of the total of the composition;
- potassium sorbate, at 0.5% of the total of the composition, and
- the remainder being water, up to 100% of the composition (89.5%).

The antifungal composition described so far, in any of its variants, is particularly relevant in countries where the use of certain antifungals in the treatment of food is not allowed, such as Switzerland and Japan.

Still, by preference, the composition may further comprise a second food-grade preservative additive and with antifungal properties of the group of polyene macrolides, which potentiates the effect of the first food-grade preservative derived from an organic acid. Thus, the composition may have the following formulation:
- food-grade alcohol in a percentage comprised between 5% and 15% of the total of the composition, both limits being included;
- a food-grade preservative with antifungal properties selected from the group of those derived from organic acids, in a percentage comprised between 0.1% and 1.0% of the total of the composition, both limits being included;
- a second food-grade antifungal preservative additive of the group of polyene macrolides, in a percentage comprised between 0.0001 and 0.001% of the total of the composition, both limits being included, and
- the remainder being water, up to 100% of the composition.

Preferably, the food-grade antifungal preservative additive of the group of polyene macrolides is pimaricin (also called natamycin).

In a more preferred embodiment, the antifungal composition consists of:
- propane-1,2-diol as a food-grade alcohol, at 10% of the total of the composition;
- potassium sorbate as a first food-grade antifungal preservative, at 0.5% of the total of the composition;
- pimaricin as a second additional food-grade antifungal preservative at 0.0005% of the total of the composition, and
- the remainder being water (89.4995%) up to 100% of the composition.

Against other products known in the art, the present invention has in its preferred form an amount of a food-grade preservative much lower (about up to 3 times lower) than that used in other inventions, as the one described in U.S. 4,418,887 (0.5% in the most preferred embodiment compared to 1.5% in the referenced patent). This difference corresponds to the results of efficacy tests of the product, in which it is observed that an amount of 0.5% is sufficient for effective control of the fungal population. In addition, it has been shown experimentally that the composition described, applied in the right way, meets the requirements established by the Royal Decree 142/2002, which regulates food-grade additives authorized for use in the treatment of surfaces of cheese and cured sausages.

In a second aspect, the present invention encompasses a method of environmental control of fungal growth, comprising the step of applying by nebulisation at least once the composition described above in any of its variants. Thus, by means of fogging equipment, the antifungal composition is applied in mist form with a particle size equal to or less than one micron, being easily dispersed and multiplying its effect, both in the atmosphere and on the surfaces with which it comes into contact.

Preferably, the fungicidal composition is applied by nebulisation inside a facility, more preferably within a closed chamber intended for the storage, drying and/or curing of food, such as for example cellars or dryers. The food can be inside the chamber when carrying out the method of environmental control of fungal growth, which is a great advantage because the sanitation systems known for this type of facility usually consist of emptying the chamber or room and its sanitation using conventional disinfectants. This action is not required when using this invention.

In short, the application of nebulisation of products based on food-grade additives with antifungal properties constitutes a novel concept, which provides food industries with a tool for improving the quality of their products, while also minimizing the risk to the health of consumers. Furthermore, a synergistic effect occurs, since it has been proved that the presence of alcohol with fungicidal properties, such as propane-1,2-diol, helps to improve the quality of nebulisation, deposition and wetting power of the product in its application, both in the atmosphere and on the surface of the food inside the chamber.

In this case, the amount of antifungal composition applied by nebulisation depends on the size of the chamber or facility where it is applied. Preferably, the dose to be applied is comprised between 4 and 20 ml per m³ of the chamber, both limits being included, more preferably with a dose comprised between 6 and 12 ml of composition per m³ of chamber, both limits being included.

The nebulisation of the composition can be performed cold. The nebuliser may have more than one outlet nozzle, for better diffusion of the composition in the atmosphere. Thus, in a particular case illustrating the invention, the nebuliser is placed inside the room or chamber and it is connected to an air pressure of between 3 and 10 bar, more preferably 7 bar, generating a homogeneous mist with particle size equal to or less than 1 micron, which expands over the entire volume of the facility, reaching all the areas of the chamber or room including the surfaces of the food stored therein.

Although the method may be carried out one moment in time, it is preferable to carry it out periodically. In one example of the invention, the composition is applied by nebulisation every 48 hours.

A third aspect included in the present invention is related to the use of the antifungal composition in order to control environmental fungal growth. Preferably, said composition may be used to control fungal growth in facilities, more preferably in facilities intended for storage, drying and/or curing of foods, such as cheese, ham, sausages, etc.

### EXAMPLES OF EMBODIMENT OF THE INVENTION

The following describes, as an example and with non-limiting character, a preferred embodiment of the invention which describes an antifungal composition and its application by the method described above.

An antifungal composition was prepared with the following composition:
- propane-1,2-diol as alcohol, at 10% of the total of the composition;
- potassium sorbate as first food-grade antifungal preservative at 0.5% of the total of the composition, and
- pimaricin as second food-grade antifungal preservative at 0.0005% of the total of the composition.

The remainder of the composition was completed with water up to 100% (89.4995%).

In a cheese drying chamber, and in the presence of this food, a nebuliser with the described composition was introduced, and it was applied to the chamber atmosphere every 48 hours for 14 days. The dose was between 8 and 10 ml per m³ of the chamber.

It was determined that, by means of this treatment, the levels of mold in the environment decreased from the initial 6250 cfu/cm³ to 2075 cfu/cm³ after the first 48 hours, and levels below 100 cfu/cm³ after 216 hours (8 nebulisations). This level of contamination was maintained and controlled for 10 days with the same treatment in the normal working conditions of the room (entering and exiting of food and workers).

### REFERENCES

- Carsberg, H.C. 2003. Food Plant Sanitation, in Food Safety Handbook. John Wiley & Sons Inc., New Jersey.
- Fente Sampayo, C.A. 1993. Estudio de la contaminación fúngica en quesos gallegos de pasta blanda. Doctoral Thesis. University of Santiago de Compostela.
- Fente Sampayo, C.A.; Vazquez Belda, B.; Rodriguez Otero, J. L., Franco-Abuin, C., Quinto-Fernández, E. and Cepeda-Saez, A. 2002. Microflora predominante en las queserías de Arzúa (España). CyTA - Journal of Food, Volume 3, Issue 5, December. pp. 271-276.
- Marriot, N.G. 1985. Principles of food sanitation. Ed AVI Publ. Co. Inc., Westport.
- Núñez Breña, F. 1994. Flora fúngica en jamón ibérico y su importancia tecnológica y sanitaria. Doctoral Thesis. University of Extremadura.
- Orihuel, E.; Bertó, R. and Canet, J. J. 1998. Monitorización de la limpieza y desinfección en industrias alimentarias. Alimentación, equipos y tecnología, September.
- Skaar, Ida; Kure, Cathrine Finne and Brendehaug, Johanne. 2004. Mold contamination in production of semi-hard cheese. International Journal of Food Microbiology, Vol. 93, N°. 1, pp. 41-49.
- Ventanas, J. (Coord.). 2001. Tecnología del jamón ibérico. De los sistemas tradicionales a la explotación racional del sabor y el aroma. pp. 515-513. Ed. Mundi Prensa, Madrid.

## Claims

1. An antifungal composition for environmental control of fungal growth, comprising:
- propane-1,2-diol as a food-grade alcohol, in a percentage comprised between 1% and 20% of the total of the composition, both limits being included;
- at least one food-grade antifungal preservative selected from the group of those derived from an organic acid selected from sorbic acid and benzoic acid, in a percentage comprised between 0.1% and 1.0% of the total of the composition, both limits being included, and
- the remainder being water, up to 100% of the composition.

2. Antifungal composition according to the preceding claim, wherein the at least one food-grade preservative is potassium sorbate.

3. Antifungal composition according to any one of claims 1 or 2, wherein the composition consists of:
- propane-1,2-diol, at 10% of the total of the composition;
- potassium sorbate, at 0.5% of the total of the composition, and
- the remainder being water, up to 100% of the composition.

4. Antifungal composition according to any one of claims 1 or 2, wherein it further comprises a second food-grade preservative with antifungal properties, selected from the group of the polyene macrolides, having the following formulation:
- propane-1,2-diol as a food-grade alcohol, in a percentage comprised between 5% and 15% of the total of the composition;
- a food-grade antifungal preservative selected from the group of those derived from an organic acid selected from sorbic acid and benzoic acid, in a percentage comprised between 0.1 % and 1.0% of the total of the composition;
- a second food-grade antifungal preservative additive, selected from the group of the polyene macrolides, comprised between 0.0001% and 0.001% of the total of the composition, both limits being included; and
- the remainder being water, up to 100% of the composition.

5. Antifungal composition according to claim 4, wherein the food-grade antifungal preservative additive of the group of polyene macrolides is pimaricin.

6. Antifungal composition according to claim 5, consisting of:
- propane-1,2-diol as alcohol, at 10% of the total of the composition;
- potassium sorbate as first food-grade antifungal preservative, at 0.5% of the total of the composition; and
- pimaricin as second food-grade antifungal preservative, at 0.0005% of the total of the composition; and
- the remainder being water, up to 100% of the composition.

7. A method of environmental control of fungal growth by the composition described in any one of the preceding claims, comprising the step of applying said composition by nebulisation at least once.

8. Method according to the preceding claim, wherein the application by nebulisation is carried out in a closed chamber intended for the storage, drying and/or curing of food.

9. Method according to claim 8, wherein the food is located within the chamber when carrying out said method.

10. Method according to any one of claims 8 or 9, wherein the amount of antifungal composition to be applied is comprised between 6 and 12 ml of composition per m³ of chamber, both limits being included.

11. Method according to any one of claims 7 to 10, wherein the composition is applied by nebulisation in the form of mist at a particle size equal to or less than 1 micron.

12. Method according to any one of claims 7 to 11, wherein the nebulisation of the composition is carried out cold.

13. Method according to any one of claims 7 to 12, wherein the composition is applied by nebulisation at an air pressure between 3 and 10 bar, both limits being included.

14. Method according to the preceding claim, wherein the composition is applied by nebulisation at an air pressure of 7 bar.

15. Method according to any one of claims 7 to 14, wherein the composition is applied by nebulisation periodically every 48 hours.

16. Use of the fungicidal composition described in any one of claims 1 to 6, for controlling environmental fungal growth in facilities intended for storage, drying and/or curing of food.

17. Use according to the preceding claim, wherein the food is selected from cheese, ham and sausages.
